Europäisches Patentamt

European Patent Office

Office européen des brevets

(19)

(11) **EP 1 422 664 A2**

(12) **EUROPEAN PATENT APPLICATION**

(43) Date of publication:
26.05.2004 Bulletin 2004/22

(51) Int Cl.⁷: $G06T\ 9/00$

(21) Application number: 03257263.8

(22) Date of filing: 18.11.2003

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **20.11.2002 KR 2002072384**

(71) Applicant: SAMSUNG ELECTRONICS CO., LTD.
Suwon-City, Kyungki-do (KR)

(72) Inventors:
• **Cha, Sang-chang, 806-801 Byuckjeokgol
Paldal-gu Gyeonggi-do (KR)**
• **Ahn, Jong-hak, 801-905 Byuckjeokgol
Paldal-gu Gyeonggi-do (KR)**

(74) Representative: **Robinson, Ian Michael et al
Appleyard Lees,
15 Clare Road
Halifax HX1 2HY (GB)**

(54) **High-speed inverse discrete cosine transformation method and apparatus**

(57) A high-speed inverse discrete cosine transformation method and apparatus are provided. All elements of a discrete cosine transformation (DCT) matrix for elements having a value other than 0 are searched for in a predetermined order when a total number of elements having a value other than 0 is not greater than a predetermined critical value. Two-dimensional (2D) IDCT is performed on the elements having a value other than 0. 2D IDCT is performed on the DCT matrix when the total number of elements having a value other than 0 is greater than the predetermined critical value.

**FIG. 4**

EP 1 422 664 A2

## EP 1 422 664 A2

**Description**

The present invention relates to a high-speed inverse discrete cosine transformation method and apparatus.

Compression of digital data, such as image signals, is one of the most important techniques in an environment that supports multimedia applications. Since image signals generally consist of a considerable amount of data, effectively transmitting, storing, and processing image signals has been limited. In order to overcome such restrictions, numerous compression stream grammars and decoding techniques have been proposed through various international standards, such as MPEG-2, MPEG-4, H.263, and H.26L.

There are two different types of compression techniques, i.e., a lossless compression technique and a loss compression technique. When adopting the lossless compression technique, data, such as characters, figures, or other ordinary data, can be compressed at an average compression rate of 2:1, and the compressed data can be flawlessly restored. On the other hand, when adopting a loss-compression technique, i.e., when compressing image data, voice data, or acoustic data, minor data loss that is imperceptible to a person is allowed and a compression rate of 10:1 can be achieved. One of the most common loss compression techniques is conversion encoding. In conversion encoding, data is arranged in a predetermined manner having high spatial correlation with one another and subjected to orthogonal conversion. During orthogonal conversion, data is divided into a variety of frequency components ranging from low-frequency components to high-frequency components, and then each of the frequency components is quantized. By doing so, the correlation among the frequency components almost disappears, and signal energy is concentrated at a low-frequency range. Among the low-frequency components resulting from orthogonal conversion, the components on which more energy is concentrated, i.e., the ones having a higher dispersion value, are more accurately represented through the use of additional bits. A low-frequency component having a dispersion value four times greater than the dispersion values of other components (i.e., a low-frequency component having an amplitude two times greater than the amplitude of other components) is assigned an additional bit. Finally, all the frequency components are expected to have the same quantization error characteristics.

Among the various types of orthogonal conversion, Karhunen-Loeve Transformation is considered one of the most effective compression techniques because image signals subjected to this transformation technique have superior energy concentration characteristics. However, Karhunen-Loeve Transformation requires different conversion functions for different images, which imposes serious restrictions on the implementation of Karhunen-Loeve Transformation. As an alternative to Karhunen-Loeve Transformation, which is difficult to apply, discrete cosine transformation (DCT) has been suggested. Since DCT exhibits almost the same performance results as Karhunen-Loeve Transformation, can be practically applied, and is also realizable, it is considered one of the core technologies in a variety of international standards. In the DCT technique, $8 \times 8$ pixels are grouped into one block and then each block is discrete-cosine-transformed. As the size of blocks increases, the efficiency of data compression becomes higher, but it becomes more difficult to perform DCT on each block. Through a number of experiments, an $8 \times 8$ block has been determined as the DCT unit which can meet both the requirements of efficient data compression and easy implementation.

Conventional data compression techniques have used discrete cosine transformation to eliminate spatial redundancies that are obtained when compressing images. Motion estimation (ME) and motion compensation (MC) have been used to eliminate temporal redundancies.

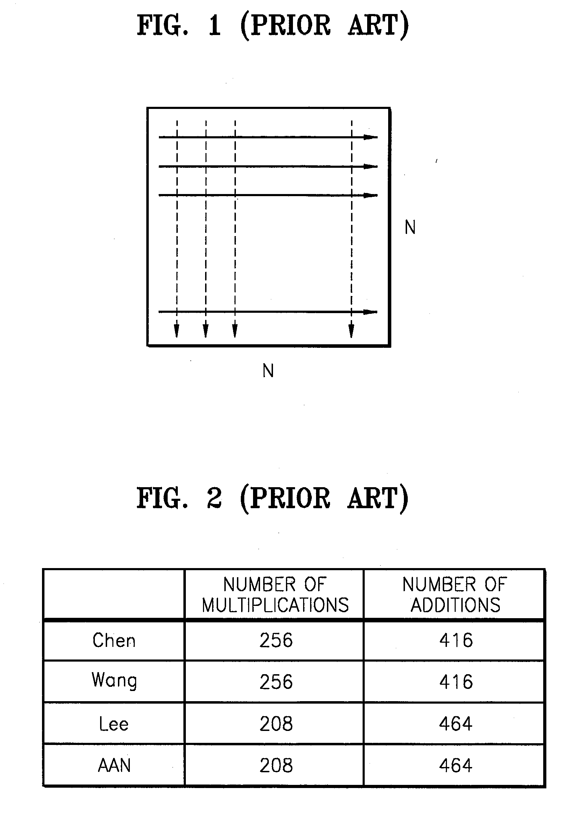

Figure 1 is a diagram illustrating conventional two dimensional inverse discrete cosine transformation (2D-IDCT). High-speed IDCT is achieved by reducing the amount of computations necessary for IDCT. As shown in Figure 1, 2D IDCT is characterized as performing one-dimensional (1D) IDCT on each row and each column of a block. In particular, the 2D IDCT shown in Figure 1 can be characterized by 1D IDCT performed along two different directions, displacement, and a row column algorithm. In other words, in 2D IDCT, 1D IDCT is performed on a block N times in a row direction, the block is displaced, and then IDCT is performed on the displaced block N times in a column direction.

Figure 2 is a table for comparing the number of computations for different conventional IDCT algorithms. There are four different conventional IDCT algorithms used in the 2D IDCT of Figure 1, i.e., Chen's algorithm based upon sparse matrix factorizations, Wang's algorithm, Lee's algorithm based upon discrete Fourier transformation, and the AAN algorithm. Figure 2 shows the number of multiplications and additions required for each of the conventional IDCT algorithms.

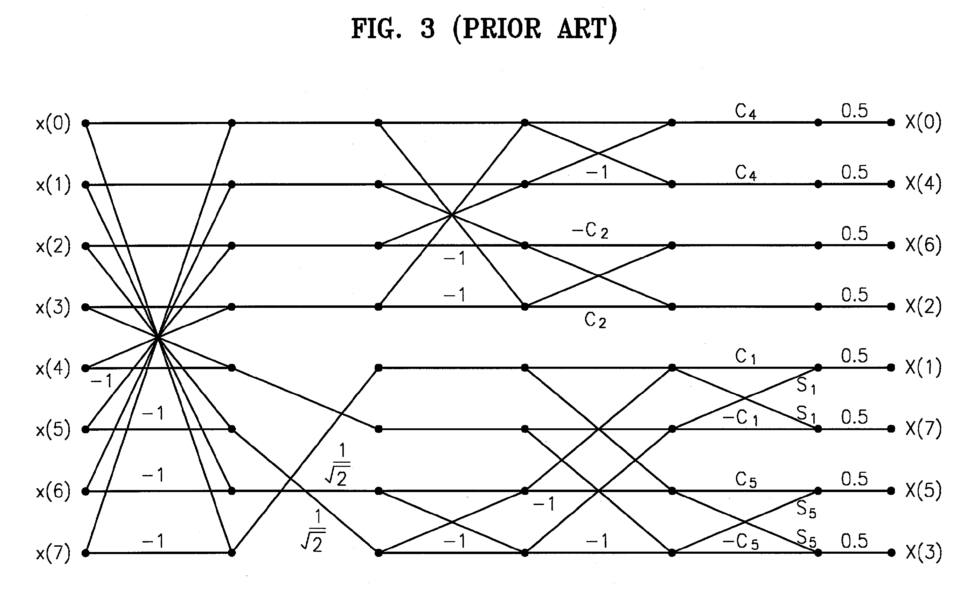

Figure 3 is a diagram illustrating Wang's algorithm, which is one of the high-speed IDCT algorithms. Referring to Figure 3, signals X(0) through X(7) are output in response to input signals x(0) through x(7), respectively. In the process of outputting the signals X(0) through X(7), the calculation result carried out on a contact point must be passed on to a following contact point. A contact point can be obtained by multiplying the previous contact point by a constant $C_0$ through $C_7$ placed therebetween. For example, $C_0 = x(1) + x(7)$. Wang's algorithm needs 16 adders and 26 multipliers. Most high-speed algorithms are more or less similar to Wang's algorithm mentioned above.

Conventional high-speed IDCT algorithms can generally reduce the complexity of computations necessary for IDCT. In the process of restoring compressed data, however, conventional high-speed IDCT algorithms require a considerable number of computations. In the current mobile environment, which is capable of providing a variety of multimedia services, decoders, i.e., mobile communications devices such as mobile phones or personal digital assistants (PDAs), are restricted in terms of size and power consumption, while encoders, i.e., multimedia service providers' server systems, are relatively free from those restrictions. Therefore, there is a need to reduce the amount of computations necessary for performing IDCT in decoders.

According to the present invention there is provided an apparatus and method as set forth in the appended claims. Preferred features of the invention will be apparent from the dependent claims, and the description which follows.

The present invention provides a high-speed inverse discrete cosine transformation (IDCT) method and apparatus, which are capable of considerably reducing the number of computations during IDCT by performing two-dimensional (2D) IDCT on a discrete cosine transformation (DCT) matrix on an element-by-element basis or on a matrix-by-matrix basis, depending on the number of elements with an valid value.

According to an aspect of the present invention, there is provided a high-speed inverse discrete cosine transformation (IDCT) method, which involves (a) searching all elements of a discrete cosine transformation (DCT) matrix for elements having a value other than 0, in a predetermined order, when a total number of elements having a value other than 0 is not greater than a predetermined critical value; (b) performing two-dimensional (2D) IDCT on the elements having a value other than 0 searched in (a); and (c) performing 2D IDCT on the DCT matrix when the total number of elements having a value other than 0 is greater than the predetermined critical value.

According to another aspect of the present invention, there is provided a high-speed IDCT apparatus, including an element searching unit, an element-wise 2D IDCT unit, and a matrix-wise 2D IDCT unit. The element searching unit searches all elements of a discrete cosine transformation (DCT) matrix for elements having a value other than 0 in a predetermined order, when a total number of elements having a value other than 0 is not greater than a predetermined critical value. The element-wise 2D IDCT unit performs 2D IDCT on the elements having a value other than 0 searched by the element searching unit. The matrix-wise 2D IDCT unit performs 2D IDCT on the DCT matrix when the total number of elements having a value other than 0 is greater than the predetermined critical value.

For a better understanding of the invention, and to show how embodiments of the same may be carried into effect, reference will now be made, by way of example, to the accompanying diagrammatic drawings in which:

Figure 1 is a diagram illustrating a conventional two-dimensional inverse discrete cosine transformation;

Figure 2 is a table showing the number of computations for different conventional inverse discrete cosine transformation (IDCT) algorithms;

Figure 3 is a diagram illustrating Wang's algorithm, which is one of the conventional high-speed IDCT algorithms;

Figure 4 is a block diagram of a high-speed IDCT apparatus according to a preferred embodiment of the present invention;

Figure 5 is a diagram illustrating an example of a typical $8 \times 8$ discrete cosine transformation (DCT) matrix;

Figure 6 is a block diagram of an element-wise 2D IDCT unit of Figure 4;

Figure 7 is a flowchart of a high-speed IDCT method according to a preferred embodiment of the present invention; and

Figure 8 is a table for comparing the number of computations used in high-speed IDCT according to the present invention to the number of computations used in conventional high-speed IDCT.

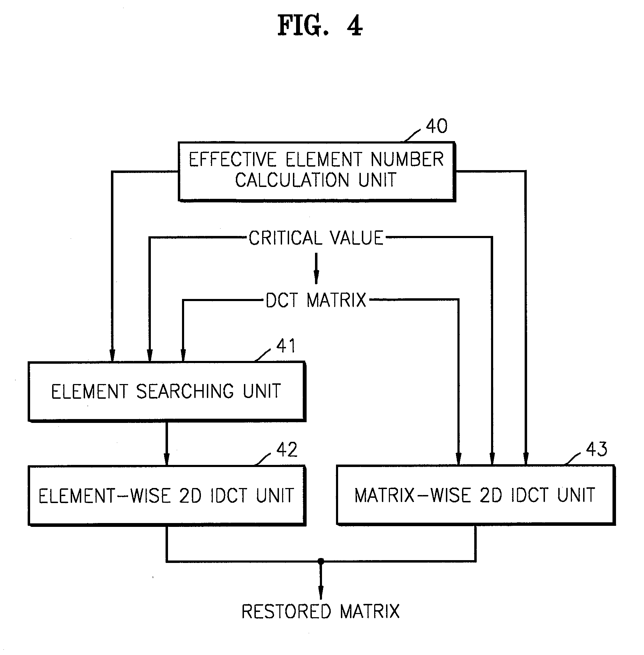

Figure 4 is a block diagram of a high-speed inverse discrete cosine transformation (IDCT) apparatus according to a preferred embodiment of the present invention. Referring to Figure 4, the high-speed IDCT apparatus includes an effective element number calculation unit 40, an element searching unit 41, an element-wise two-dimensional (2D) IDCT unit 42, and a matrix-wise 2D IDCT unit 43.

A process for compressing image data is as follows. First, an image signal is discrete-cosine-transformed so that the image signal is divided into several frequency ranges. Here, the energy of image data is generally concentrated in low-frequency ranges. Therefore, by quantizing image data, it is possible to compress the image data using a reduced number of bits. Thereafter, quantization is performed on the image data so that the image data is divided into identical sized quanta. Then, quanta represented by a value smaller than a predetermined number are given a value of 0 to replace their respective original data values, so that the size of the entire data can be reduced. At this moment, data loss may occur due to the assignment of 0 values. Thereafter, run-length encoding is performed, in which a repetition of characters is replaced with the number of same characters and a single character. As the number of characters constituting each run increases and the number of run occurrences increases, compression efficiency increases. Thereafter, Huffman encoding is performed, in which integer sequences obtained by zigzag scanning are converted into binary values. By doing so, an $8 \times 8$ matrix is compressed into several combinations of 0s and 1s. In order to decode such compressed image data, the above-described compression process must be inversely performed.

As described above, in the case of compressing image data according to the process of performing DCT and quantization on the image data, the compressed data is mostly concentrated in low-frequency ranges, while almost nothing is left in high-frequency ranges. As the quantization scale becomes larger, the number of elements having a value of 0 increases while the number of elements having a value other than 0 decreases. In contrast, as the quantization scale becomes smaller, the number of elements having a value other than 0 increases. In a scenario with a large quantization scale, the number of elements in a DCT matrix having a value other than 0 is small. Using a conventional high-speed IDCT algorithm, only these elements are inversely discrete-cosine-transformed using a conventional high-speed IDCT algorithm without the need to inversely discrete-cosine-transform all elements of the DCT matrix. On the other hand, in a scenario with a small quantization scale, many elements having a value other than 0 exist, and it is effective to use the conventional high-speed IDCT algorithm.

In a case where the number of elements in the DCT matrix having a value other than 0 is not greater than a predetermined critical value, the element searching unit 41 searches for the elements having a value other than 0 in a predetermined order. The element-wise 2D IDCT unit 42 performs 2D IDCT on the searched elements. As described above, the number of elements having a value other than 0 is compared with the predetermined critical value to determine whether IDCT is performed on an element-by-element basis or on a matrix-by-matrix basis. The predetermined critical value represents a maximum number of elements having a value other than 0, at which the number of computations for element-wise IDCT is less than the number of computations for matrix-wise IDCT. A number of experiments has determined that with a quantization scale not greater than 10, the highest compression efficiency is achieved when the critical value is set to 15, and with a quantization scale greater than 10, the highest compression efficiency is achieved when the critical value is set to 10.

As described above, the process of decoding a compressed file is just the opposite of the process of encoding a file into the compressed file. Therefore, the decoding process is carried out by sequentially performing Huffman decoding, run-length decoding, inverse quantization, and IDCT on the compressed file. The number of elements in the DCT matrix having a value other than 0 can be determined in advance during the process of run-length decoding, which is performed prior to IDCT. Since run-length encoding replaces a series of 0s with a single 0 and the length of the series of 0s, the length of the series of 0s can be figured out in run-length decoding. Through run-length decoding it is also possible to identify the number of elements having a value other than 0.

In other words, the effective element number calculation unit 40 counts only elements having a value other than 0 in the process of run-length decoding. For example, suppose that a quantization scale is not greater than 10 and a critical value is set to 15 in the process of encoding, and the number of elements having a value other than 0 is not greater than 15, it is effective to perform IDCT on an element-by-element basis rather than on a matrix-by-matrix basis.

In a case where the number of elements in the DCT matrix having a value other than 0 is greater than the predetermined critical value, the matrix-wise 2D IDCT unit 43 performs 2D IDCT on the DCT matrix. In this case where a quantization scale is not greater than 10 and a critical value is set to 15 in the process of encoding, and the number of elements having a value other than 0 is greater than 15, it is effective to perform IDCT on a matrix-by-matrix basis rather than on an element-by-element basis. The matrix-wise 2D IDCT unit 43 performs such as 2D IDCT on the DCT matrix using a conventional high-speed IDCT algorithm such as Wang's algorithm, Chen's algorithm, Lee's algorithm, or the AAN algorithm.

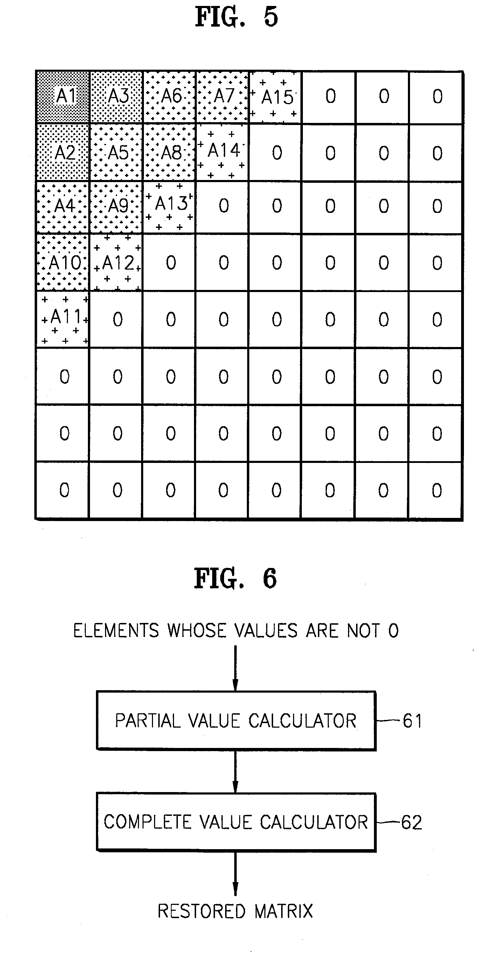

Figure 5 is a diagram illustrating a typical example of an 8x8 DCT matrix. In Figure 5, an element representing more concentrated image data is darker. Element A1, which belongs to the lowest frequency range, is the darkest one in the $8 \times 8$ DCT matrix. In the 8x8 DCT matrix, the value of element A1 is called a direct current (DC) value, and values of the other 63 elements, A2 through A64, are called alternating current (AC) values. The DC value and the values of elements neighboring element A1 are very important in determining the brightness of the entire image.

As for the predetermined order used by the element searching unit 41 when searching for the elements having a value other than 0, the element searching unit 41 searches the DCT matrix along a horizontal direction or a vertical direction. Since most of the elements having a value other than 0 are concentrated near the upper left corner of the DCT matrix, it is preferable for the element searching unit 41 to search the elements of the DCT matrix in a zigzag manner, i.e., in the order of A1, A2, A3, ... , A64, thereby reducing the number of calculations.

Figure 6 is a block diagram of the element-wise 2D IDCT unit 42 of Figure 4. Referring to Figure 6, the 2D IDCT unit 42 includes a partial value calculator 61 and a complete value calculator 62.

In general, 2D IDCT is performed using Equation (1) below.

$$V(x,y) = \sum_{i=0}^{N-1}\sum_{j=0}^{N-1} C(i,j)T(i,j)\cos(\frac{(2x+1)i\pi}{2N})\cos(\frac{(2y+1)j\pi}{2N}) \qquad \cdots(1)$$

$$if\ i \neq 0\ and\ j \neq 0, C(i,j) = \frac{2}{N}$$

$$if\ i = 0\ or\ j = 0, C(i,j) = \frac{1}{N}$$

In Equation (1), *T(i, j)* represents the value of an element located at (i+1, j+1) of a DCT matrix T, and *V(x, y)* represents the value of an element located at (x+1, y+1) of a matrix V, which represents the restored matrix obtained through IDCT on the DCT matrix T. If the DCT matrix T is an 8x8 matrix, *i, j, x*, and *y* each have a value between 0 and 7, and N=8.

A superimposition principle is adopted to selectively process the elements in the DCT matrix having a value other than 0. According to the superimposition principle, each DCT coefficient block or every predetermined number of DCT coefficient blocks is inversely discrete-cosine-transformed, and then all IDCT results are summed up. This process achieves the same results as those produced after performing IDCT on all the DCT coefficient blocks of the DCT matrix at the same time. In the present invention, DCT coefficient block values are searched one by one, DCT coefficient blocks having valid values are inversely discrete-cosine-transformed, and IDCT results are summed up, thus obtaining a restored matrix (restoring an original version of the DCT matrix). In order to perform 2D IDCT on an element-by-element basis, the predetermined calculation process shown in Equation (2) must be performed on elements in the DCT matrix having a value other than 0.

$$IDCT(T) = IDCT(T(0,0)) + IDCT(T(0,1)) + IDCT(T(0,2))+\cdots+ IDCT(T(0,7))$$

$$+ IDCT(T(1,0)) + IDCT(T(1,1)) + IDCT(T(1,2))+ \cdots+ IDCT(T(1,7))$$

$$+ IDCT(T(2,0)) + IDCT(T(2,1)) + IDCT(T(2,2))+\cdots+ IDCT(T(2,7))$$

$$+\cdots+$$

$$+ IDCT(T(7,0)) + IDCT(T(7,1)) + IDCT(T(7,2))+\cdots+ IDCT(T(7,7)) \qquad (2)$$

In Equation (2), *IDCT(T)* represents an 8x8 matrix V restored from the $8\times8$ DCT matrix T. *IDCT(T(0, 0))* represents an $8\times8$ matrix, which is obtained by substituting the variables in Equation (1) with the coordinates (i=0 and j=0) and value T(0, 0) of the element in the first row and the first column of the DCT matrix T, and the coordinates (x and y are a value between 0 and 7) of each element in the restored $8\times8$ matrix V. *IDCT(T(0, 0))* accounts for part of the restored $8\times8$ matrix V. In other words, according to the superimposition principle, the restored matrix V is obtained by summing up all matrices generated for the elements having a value other than 0. In the present invention, each of the matrices generated for the elements having a value other than 0 is stored in memory in a table format, and values located at memory addresses and corresponding to all the tables stored in the memory are summed up, thereby obtaining the restored matrix V.

The above-described algorithm can be applied to the case where the number of elements having a value other than 0 is not greater than the critical value, given that the critical value, which is used to determine whether to perform IDCT on an element-by-element basis or on a matrix-by-matrix basis, can be 6, 10, or 15, depending on the quantization scale. In the case where the number of elements having a value other than 0 is greater than the critical value, a conventional high-speed algorithm can be used. Various image compression algorithms, such as MPEG-2, MPEG-4, and H.261, generally produce no more than 10 elements having a value other than 0.

For example, when the number of elements having a value other than 0 is 10, element-wise 2D IDCT is represented by Equation (3) below.

$$IDCT(T) = IDCT(T(0,0)) + IDCT(T(0,1)) + IDCT(T(0,2)) + IDCT(T(0,3)) \qquad \cdots(3)$$
$$= IDCT(T(1,0)) + IDCT(T(1,1)) + IDCT(T(1,2))$$
$$= IDCT(T(2,0)) + IDCT(T(2,1))$$
$$= IDCT(T(3,0))$$

The partial value calculator 61 obtains $IDCT(T(i, j))$, which constitutes part of the restored matrix V, by substituting variables in Equation (1) with the coordinates $(i, j)$ of an element having a value other than 0, which is searched for by the element searching unit 41 of Figure 4, and the coordinates $(x, y)$ of each element in the restored matrix V. The complete value calculator 62 takes advantage of the superimposition principle and obtains a complete value V($x$, $y$) corresponding to each element of the restored matrix V. The value is obtained by summing up $IDCT(T(i, j))$, which is generated by the partial value calculator 61 for each of the elements that has a value other than 0 and has been searched for by the element searching unit 41.

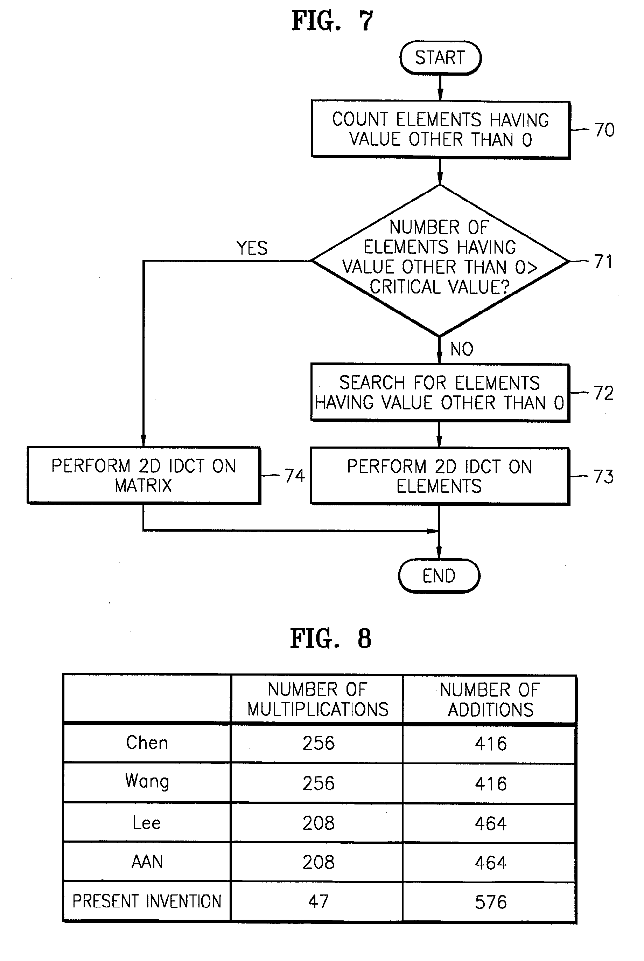

Figure 7 is a flowchart of a high-speed IDCT method according to a preferred embodiment of the present invention. Referring to Figure 7, in step 70, the number of elements in a DCT matrix having a value other than 0 is counted during run-length decoding, which is part of a process of the decoding process for a predetermined compressed file and is performed before IDCT.

If the number of elements having a value other than 0 is not greater than a predetermined critical value in step 71, the elements having a value other than 0 are searched for one by one in a predetermined order in step 72. Here, the number of elements having a value other than 0 is discovered in the process of run-length decoding, which is performed before IDCT. In addition, the critical value is set to the maximum number of elements having a value other than 0, at which the number of computations for element-wise IDCT is less than the number of computations for matrix-wise IDCT. Furthermore, the search for elements having a value other than 0 include a zigzag search across all elements of the DCT matrix, starting with the element in the first column and first row of the DCT matrix.

Thereafter, the elements having a value other than 0 are inversely discrete-cosine-transformed in step 73. In other words, a partial value for each element of a restored matrix is obtained by substituting the variables in an IDCT formula with the value and coordinates of each element having a value other than 0 and the coordinates of each element in the restored matrix. Thereafter, according to the superimposition principle, partial values obtained for all the elements of the restored matrix are summed up, thereby obtaining a complete value for each element of the restored matrix.

If the number of elements having a value other than 0 in the DCT matrix is greater than the critical value in step 71, the DCT matrix is subjected to 2D IDCT in step 74. In other words, the DCT matrix is two-dimensionally inverse-discrete-cosine-transformed using a conventional high-speed IDCT algorithm, such as Wang's algorithm, Chen's algorithm, Lee's algorithm, or the AAN algorithm.

Figure 8 is a table for comparing the number of computations necessary for high-speed IDCT according to the present invention to the number of computations necessary for conventional high-speed IDCT. Figure 8 shows experimental results obtained when a quantization scale is large. As described above, in a case of a small quantization scale, use of a conventional 2D IDCT algorithm is required.

The above-described embodiments of the present invention can be realized as a computer program that can be recorded on a computer-readable recording medium and can be executed in a digital computer.

The computer-readable recording medium includes a magnetic storage medium, such as ROM, a floppy disk, or a hard disk; an optical recording medium, such as a CD-ROM or a DVD; and a carrier wave, such as data transmission through the Internet.

According to the present invention, it is possible to minimize the number of computations by eliminating unnecessary computations for elements having a value of 0, which account for the majority of DCT matrix elements. In addition, the present invention provides an optimum IDCT algorithm for different quantization scales. For example, when the data compression rate is low and the number of elements having a value other than 0 is small, a conventional high-speed IDCT algorithm is adopted. Even though the element-wise 2D IDCT algorithm of the present invention and a conventional IDCT algorithm are both used, the number of computations for IDCT are still considerably reduced, because nearly 80% of target image signals are subjected to the element-wise 2D IDCT algorithm of the present invention. The percentage of image data that can be processed using the element-wise 2D IDCT algorithm of the present invention, rather than the conventional high-speed IDCT algorithm, varies on a case-by-case basis. Furthermore, according to the present invention, it is possible to design a stable video decoder having enhanced performance or a compact-sized mobile video decoder having reduced power consumption by dramatically reducing the number of computations performed by an IDCT module, which amounts to nearly 25 - 30 % of the total number of computations performed in a video decoder.

In the prior art, computations in high-speed DCT algorithms are carried out with reference to the end of block (EOB) and different high-speed IDCT algorithms are required for different scanning methods. However, the present invention can be applied irrespective of the type of scanning, whether the type is zigzag scanning, horizontal scanning, or vertical scanning. In addition, the present invention maximizes its use of valid numbers in computations. In other words, since in the present invention, only one round of IDCT is carried out, the peak signal-to-noise ratio is higher in the present invention than in the prior art.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A high-speed inverse discrete cosine transformation (IDCT) method, comprising:

    (a) searching all elements of a discrete cosine transformation (DCT) matrix for elements having values other than 0, in a predetermined order, when a total number of elements having values other than 0 is not greater than a predetermined critical value;

    (b) performing a two-dimensional (2D) IDCT on the elements having values other than 0 searched for in (a); and

    (c) performing 2D IDCT on the DCT matrix when the total number of elements having values other than 0 is greater than the predetermined critical value.

2. The method of claim 1, wherein the step (b) comprises:

    (b1) obtaining a respective partial value for each element of a restored matrix, which corresponds to the DCT matrix, by substituting variables in an IDCT formula with a respective value and respective coordinates of each element having a value other than 0 and respective coordinates of each element in the restored matrix; and

    (b2) obtaining complete values for the elements of the restored matrix by summing up partial values obtained in (b1) for the elements of the restored matrix.

3. The method of claim 1 or 2, wherein in the step (c), 2D IDCT is performed on the DCT matrix using a high-speed IDCT algorithm, wherein the high-speed IDCT algorithm is one of Wang's algorithm, Chen's algorithm, Lee's algorithm, and AAN algorithm.

4. The method of any preceding claim further comprising:

    (a-1) obtaining the total number of elements having values other than 0 by counting the elements having values other than 0 during a run-length decoding process for a predetermined compressed file, which is performed before the searching of all elements of a discrete cosine transformation (DCT) matrix for elements having values other than 0.

5. The method of any preceding claim, wherein the predetermined critical value is set to be a maximum number of elements having values other than 0, at which a number of computations for element-wise IDCT is less than a number of computations for matrix-wise IDCT.

6. The method of any preceding claim, wherein the elements of the DCT matrix are sequentially searched in a zigzag manner starting with an element in a first column and a first row of the DCT matrix.

7. A high-speed IDCT apparatus, comprising:

an element searching unit (41) which searches all elements of a discrete cosine transformation (DCT) matrix for elements having values other than 0 in a predetermined order, when a total number of elements having values other than 0 is not greater than a predetermined critical value;

an element-wise 2D IDCT unit (42) which performs 2D IDCT on the elements having values other than 0 searched for by the element searching unit (41); and

a matrix-wise 2D IDCT unit (43) which performs 2D IDCT on the DCT matrix when the total number of elements having values other than 0 is greater than the predetermined critical value.

8. The apparatus of claim 7, wherein the element-wise 2D IDCT unit (42) comprises:

a partial value calculator (61) which obtains a respective partial value for each element of a restored matrix, which corresponds to the DCT matrix, by substituting variables in an IDCT formula with a respective value and respective coordinates of each element having a value other than 0 and respective coordinates of each element in the restored matrix; and

a complete value calculator (62) which obtains complete values for the elements of the restored matrix by summing up partial values obtained for the elements of the restored matrix by the partial value calculator (61).

9. The apparatus of claim 7 or 8, wherein the matrix-wise 2D IDCT unit (43) performs 2D IDCT on the DCT matrix using a high-speed IDCT algorithm, wherein the conventional high-speed IDCT algorithm is one of Wang's algorithm, Chen's algorithm, Lee's algorithm, and AAN algorithm.

10. The apparatus of claim 7, 8 or 9 further comprising an effective element number calculation unit (40) that obtains the total number of elements having values other than 0 by counting the elements having values other than 0 during a run-length decoding process, which is part of a decoding process for a predetermined compressed file and is performed before IDCT.

11. The apparatus of any of claims 7 to 10, wherein the predetermined critical value is set to be a maximum number of elements having values other than 0, at which a number of computations for element-wise IDCT is less than a number of computations for matrix-wise IDCT.

12. The apparatus of any of claims 7 to 11, wherein the elements of the DCT matrix are sequentially searched in a zigzag manner starting with an element in a first column and a first row of the DCT matrix.

13. A computer-readable recording medium for recording a computer program code for enabling a computer to provide a service of high-speed inverse discrete cosine transformation (IDCT), the service comprising:

(a) searching all elements of a discrete cosine transformation (DCT) matrix for elements having values other than 0, in a predetermined order, when a total number of elements having values other than 0 is not greater than a predetermined critical value;

(b) performing a two-dimensional (2D) IDCT on the elements having values other than 0 searched for in (a); and

(c) performing 2D IDCT on the DCT matrix when the total number of elements having values other than 0 is greater than the predetermined critical value.

14. The computer-readable recording medium of claim 13, wherein (b) comprises:

(b1) obtaining a respective partial value for each element of a restored matrix, which corresponds to the DCT matrix, by substituting variables in an IDCT formula with a respective value and respective coordinates of each element having a value other than 0 and respective coordinates of each element in the restored matrix; and

(b2) obtaining complete values for the elements of the restored matrix by summing up partial values obtained in (b1) for the elements of the restored matrix.

15. The computer-readable recording medium of claim 13 or 14, wherein in (c), 2D IDCT is performed on the DCT matrix using a high-speed IDCT algorithm, wherein the high-speed IDCT algorithm is one of Wang's algorithm, Chen's algorithm, Lee's algorithm, and AAN algorithm.

16. The computer-readable recording medium of claim 13, 14 or 15 further comprising:

(a-1) obtaining the total number of elements having values other than 0 by counting the elements having values other than 0 during a run-length decoding process for a predetermined compressed file, which is performed before the searching of all elements of a discrete cosine transformation (DCT) matrix for elements having values other than 0.

17. The computer-readable recording medium of any of claims 13 to 16, wherein the predetermined critical value is set to be a maximum number of elements having values other than 0, at which a number of computations for element-wise IDCT is less than a number of computations for matrix-wise IDCT.

18. The computer-readable recording medium of any of claims 13 to 17, wherein the elements of the DCT matrix are sequentially searched in a zigzag manner starting with an element in a first column and a first row of the DCT matrix.

# FIG. 1 (PRIOR ART)

# FIG. 2 (PRIOR ART)

|  | NUMBER OF MULTIPLICATIONS | NUMBER OF ADDITIONS |
|---|---|---|
| Chen | 256 | 416 |
| Wang | 256 | 416 |
| Lee | 208 | 464 |
| AAN | 208 | 464 |

FIG. 3 (PRIOR ART)

EP 1 422 664 A2

# FIG. 4

EFFECTIVE ELEMENT NUMBER CALCULATION UNIT — 40

CRITICAL VALUE

DCT MATRIX

ELEMENT SEARCHING UNIT — 41

ELEMENT-WISE 2D IDCT UNIT — 42

MATRIX-WISE 2D IDCT UNIT — 43

RESTORED MATRIX

# FIG. 5

| A1 | A3 | A6 | A7 | A15 | 0 | 0 | 0 |
| A2 | A5 | A8 | A14 | 0 | 0 | 0 | 0 |
| A4 | A9 | A13 | 0 | 0 | 0 | 0 | 0 |
| A10 | A12 | 0 | 0 | 0 | 0 | 0 | 0 |
| A11 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |

# FIG. 6

ELEMENTS WHOSE VALUES ARE NOT 0

↓

PARTIAL VALUE CALCULATOR —61

↓

COMPLETE VALUE CALCULATOR —62

↓

RESTORED MATRIX

# FIG. 7

START

COUNT ELEMENTS HAVING VALUE OTHER THAN 0 — 70

NUMBER OF ELEMENTS HAVING VALUE OTHER THAN 0> CRITICAL VALUE? — 71

YES

NO

SEARCH FOR ELEMENTS HAVING VALUE OTHER THAN 0 — 72

PERFORM 2D IDCT ON MATRIX — 74

PERFORM 2D IDCT ON ELEMENTS — 73

END

# FIG. 8

|  | NUMBER OF MULTIPLICATIONS | NUMBER OF ADDITIONS |
|---|---|---|
| Chen | 256 | 416 |
| Wang | 256 | 416 |
| Lee | 208 | 464 |
| AAN | 208 | 464 |
| PRESENT INVENTION | 47 | 576 |